# EUROPÄISCHE PATENTSCHRIFT

(11) **EP 1 322 790 B1**
(45) Veröffentlichungstag und Bekanntmachung des Hinweises auf die Patenterteilung: **20.07.2005**
(21) Anmeldenummer: 01969788.7
(22) Anmeldetag: 28.09.2001
(51) Int. Cl.: C21B 7/10, F27B 1/24

(54) **KÜHLELEMENT FÜR SCHACHTÖFEN**
COOLING ELEMENT FOR SHAFT FURNACES
ELEMENT DE REFROIDISSEMENT POUR FOURS A CUVE

(30) Priorität: 07.10.2000 DE 10049707
(43) Veröffentlichungstag der Anmeldung: 02.07.2003
(73) Patentinhaber: SMS Demag Aktiengesellschaft, 40237 Düsseldorf (DE)
(72) Erfinder: HEINRICH, Peter, 47608 Geldern (DE)
(74) Vertreter: Valentin, Ekkehard
(86) Internationale Anmeldenummer: PCT/EP2001/011221
(87) Internationale Veröffentlichungsnummer: WO 2002/031211

(56) Entgegenhaltungen:
- DE-A- 3 313 998
- DE-A- 19 503 912
- GB-A- 1 564 294
- GB-A- 2 073 387
- US-A- 4 572 269

## Beschreibung

Die Erfindung betrifft ein Kühlelement für Schachtöfen, beispielsweise Hochöfen, mit einem im Kühlelement inner angeordneten Kanal für nur in einer Richtung fließendes Kühlmittel, zu welchem Kanal an gegenüberliegenden Randbereichen des Kühlelementes von außer mit dem Kühlelement verbundene Rohrstücke für den Kühlmittelzulauf bzw.-ablauf führen. Das Kühlmittel ist vorzugsweise Wasser.

Derartige Kühlelemente - auch unter dem Begriff Stave bekannt - dienen zur Kühlung von Hochofenwänden, werden üblicherweise zwischen dem Ofenmantel bzw. -panzer und der Ofenausmauerung angeordnet und sind auf der dem Ofeninneren zugewandten Seite mit feuerfestem Material versehen.

Es sind Kühlelemente bekannt, bei denen die Kühlkanäle durch in Gußeisen eingegossene Rohre - üblicherweise aus Stahl - gebildet werden. Die das Kühlelement durchlaufenden Kühlkanäle sind in der Regel vertikal zur Längsachse des Grundkörpers angeordnet. Diese Platten können neben Gußeisen auch aus Kupferguß bestehen. Weiterhin kennt man geschmiedete oder gewalzte Kühlplatten aus Kupfer oder einer niedriglegierten Kupferlegierung, deren Kühlkanäle vertikal verlaufende Sackbohrungen sind, welche durch mechanisches Tiefbohren oder auch durch Fräsen eingebracht werden. Schließlich ist auch bekannt, ein Kühelement aus einem oder einer Mehrzahl von stranggepreßten oder gewalzten Profilabschnitten mit in ihrem Inneren angeordneten Kühlmittelkanälen herzustellen.

Hierbei ist im wesentlichen den bekannten Staves gemeinsam, daß sie einen mit Kühlmittel durchflossenen Bereich durch Anordnung von Kühlkanälen aufweisen, die in entsprechende, durch die Hochofenwand führende, Rohrstücke für den Kühlmittelzulauf und -ablauf münden sowie einen Kantenbereich aufweisen, der sich im wesentlichen jenseits der Rohrstücke erstreckt. Diese Kantenbereiche werden naturgemäß nicht so intensiv gekühlt wie der von den Kühlkanälen durchzogene Bereich des Staves. Grund für die weniger intensive Kühlung der Kantenbereiche ist der im Verhältnis große Abstand zwischen dem kühlmitteldurchflossenen Bereich und den Ecken bzw. Kanten des Staves, d.h. den endseitigen Bereichen. Die dort anfallende Wärme muß mittels Wärmeleitung zu dem mit Kühlmittel durchflossenen Querschnitt transportiert werden. Dies führt an den Ecken und Kanten zu höheren Temperaturen als im restlichen Bereich des Staves und somit zu Wärmespannungen, Überhitzungen und voreilendem Verschleiß. Vor allem Staves aus Gußeisen erleiden Materialverluste bevorzugt an den Ecken sowie den Kanten, wodurch schließlich der Hochofenpanzer an diesen Stellen nicht mehr ausreichend geschützt ist und ein Austausch der betreffenden Staves notwendig wird. Bei Kupfer-Staves treten grundsätzlich die gleichen Probleme auf, dies jedoch wegen der sehr viel höheren Wärmeleitfähigkeit des Materials erst später und weniger stark.

Aus geometrischen und fertigungstechnischen Gründen können die Kühlrohre nicht beliebig weit in die Kantenbereiche von Staves geführt werden, um somit eine Verbesserung der Kühlung zu bewirken. An der Außenseite des Hochofenpanzers sind sogenannte Kompensatoren angebracht, die für ein gasdichtes Herausführen der Kühlrohre aus dem Hochofenpanzer sorgen. Diese erfordem aufgrund ihrer geometrischen Abmessungen die Einhaltung eines bestimmten vertikalen und horizontalen Mittenabstandes der Kühlrohre zueinander. Dieser Abstand ist auch erforderlich, damit der Hochofenpanzer durch zu nah aneinanderliegende Lochreihen nicht zu stark geschwächt wird. Bei Staves mit eingegossenen Rohren ist der Biegewinkel der Rohre je nach Außendurchmesser und Wandstärke begrenzt, so daß eine Biegungsform, wie sie zum Durchlaufen des Kantenbereichs notwendig wäre, nicht erreichbar ist.

Das Problem der schlechteren Kühlung von Ecken und Kanten der Kühlelemente wird mit der Kühlplatte aus der EP-A-705 906 dadurch gelöst, daß deren Kantenbereiche mit Bohrungen versehen werden, die im Vergleich zu den eigentlichen Kühlkanälen schmalere Querschnitte aufweisen. Insgesamt wird durch vertikale und horizontale Bohrungen für den Kantenbereich ein eigenes Kühlsystem mit eigenen Kühlmitteleinläufen und -ausläufen vorgeschlagen mit den damit notwendigen Rohrstutzen, die sich durch die Hochofenwand erstrekken.

Aus der DE 33 13 998 A1 ist eine Kühlplatte für metallurgische Öfen sowie ein Verfahren zu ihrer Herstellung bekannt. Diese Kühlplatte besteht aus einem Gußwerkstoff, wobei die Kühlmittelkanäle durch Stahlrohre gebildet werden. Um ein Kühlelement mit einem nicht ummantelten Stahlrohr bei einwandfreiem Wärmeübergang bereitzustellen, soll eine sich von einer Schmalseitenfläche des Gußkörpers in das Innere des Gußkörpers erstreckende Bohrung vorgesehen sein, wobei in die Bohrung ein mit der Bohrungswand in Pressverbindung stehendes Stahlrohr eingesetzt ist. Weil es schwierig ist, ein Rohr mit einem gekrümmten Kniebereich in eine vertikale Bohrung einzuführen und die relativ großen Öffnungen am Kopf- und Endbereich der Platten mit Feuerfest-Material geschlossen werden müssen, wird vorgeschlagen, den Zu- und Abfluss der Kühlmittels auf einer Seite der Kühlplatte zusammenzufassen. Das Stahlrohr wird als Doppelmantelrohr gebildet, das an seinem unteren Ende durch einen Boden geschlossen ist. Das Kühlmittel fließt durch den äußeren Ringbereich in das Kühlelement und durch das Innenrohr zurück.

Der Erfindung liegt die Aufgabe zugrunde, ein Kühlelement mit einer guten Kühlung in den Kantenbereichen bei gleichteitig guter Kühlung im inneren Bereich bei hoher konstruktiver Stabilität des Kühlelementes zu shaffer. Zur Lösung dieser Aufgabe wird ein Kühlelement mit den Merkmalen des Anspruchs 1 vorgeschlagen. Vorteilhafte Weiterbildungen sind in den Unteransprüchen offenbart.

Im Gegensatz zum Stand der Technik nach der EP-A-705 906 handelt es sich bei der vorgeschlagenen Kühlung nicht um ein separates Kühlsystem mit eigenen Rohrstutzen - die wiederum die Hochofenwand schwächen - , sondern um eine Veränderung der Kühlmittelführung durch Verlängerung der den Grundkörper durchziehenden Kühlkanäle in den Bereich der Kanten, unter den auch die Eckbereiche fallen können. Der sich im Kantenbereich erstreckende Kanalquerschnitt ist im Vergleich größer und ist derart mit einem (Kühlmittel-) Führungselement versehen, so daß im Fall des Kühlmittelabflusses das Kühlmittel - vom Grundkörper her strömend - in den Randbereich fließt, umgelenkt wird und im wesentlichen entgegen der vorherigen Strömungsrichtung zur Mündung des Rohrstückes zurückfließt. Im Falle des Kühlmittelzulaufs wird das Kühlmittel zuerst in den Kantenbereich und von dort Richtung Kühlkanal in den Grundkörper gelenkt. Es ist dabei vorteilhaft, den Querschnitt des Kühlabschnittes zu verdoppeln, d.h., der eigentliche Kühlkanalquerschnitt für die Hin- und Zurückströmung bleibt erhalten und damit eine homogene Strömungsgeschwindigkeit innerhalb eines Kühlsystems.

Auf diese Weise wird die Kühlwirkung in den Kanten- bzw. Eckbereichen des Staves verbessert, ohne den Abstand der Kühlrohrdurchtritte bzw. Rohrstücke im Ofenpanzer zu verändem, der durch die Kompensatoren bestimmt wird. Insgesamt wird somit erreicht, daß das Kühlmittel bis in die Randbereiche des Staves gelangt, wobei der noch verbleibende Abstand zwischen Kühlwasser durchflossenen und nicht durchflossenen Bereichen entscheidend verkürzt wird und zwar auf das Maß, daß auch im regulären Teil des Kühlelementes für eine ausreichende Kühlung ausreicht.

Als besonders bevorzugte Ausführungsform wird vorgeschlagen, den Kantenbereich des Kühlelementes als separates Endstück auszubilden, das mit Kühlkanalabschnitten mit Führungselementen versehen ist. Das separate Endstück wird an dem die internen Kühlkanäle führenden Grundkörper befestigt. Das Endstück kann einstückig, beispielsweise als Guß- oder Schmiedeteil, gefertigt sein oder mehrstückig als Schweißkonstruktion. Das Endstück ist vorzugsweise so ausgebildet, daß es bereits eine entsprechende Bohrung zur Aufnahme des Mündungsbereiches des Rohrstückes für den Kühlmittelzufluß oder -abfluß, das sich jeweils durch die Schachtofenwand erstreckt, aufweist.

Bei einem Staves mit einem Grundkörper mit mehreren vertikalen Kühlkanälen empfiehlt sich die Anordnung von einem Endstück, dessen Anzahl an Kühlabschnitten an die Anzahl der internen vertikalen Kühlkanäle angepaßt ist. Bei einem sich aus mehreren Profilen zusammensetzenden Stave sind auch eine entsprechende Anzahl an Endstücken denkbar.

Nachfolgend wird eine bevorzugte Ausführungsform des erfindungsgemäßen Kühlelementes dargestellt. Hierbei zeigen:
- Fig. 1: eine Seitenansicht von zwei übereinander angeordneten, abschnittsweise dargestellten, Kühlelementen mit einem erfindungsgemäß vorgeschlagenen Endkopfstück;
- Fig. 2: eine Ansicht der Kühlelemente nach Fig. 1 von der Seite des Ofenpanzers aus gesehen;
- Fig. 3: eine Seitenansicht von zwei übereinander angeordneten, abschnittsweise dargestellten, Kühlelementen nach dem Stand der Technik;
- Fig. 4: eine Ansicht der Kühlelemente nach Figur 3 von der Seite des Ofenpanzers aus gesehen.

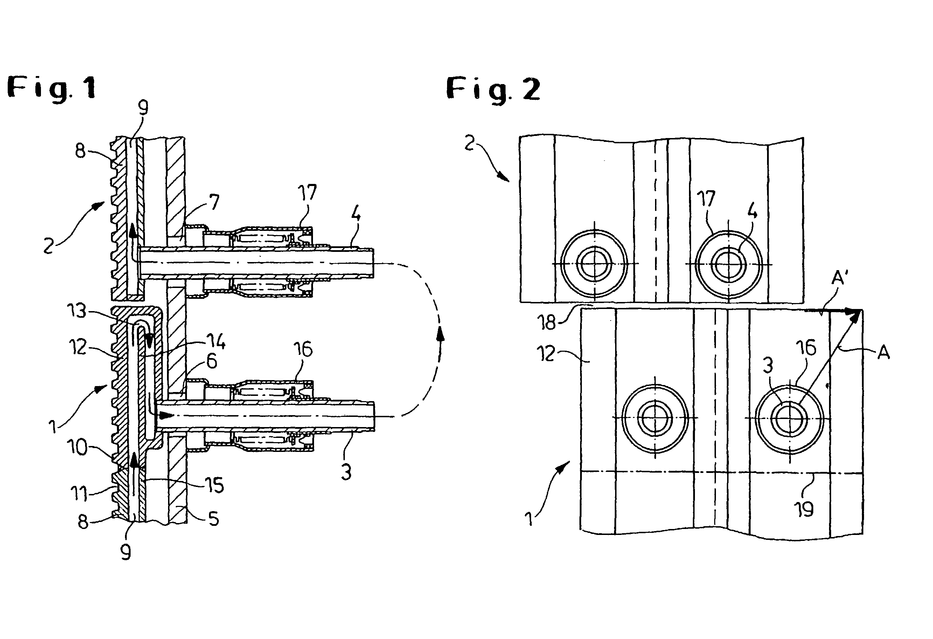

Fig. 1 zeigt abschnittsweise zwei Staves 1, 2. Hierbei ist von dem unteren Staves 1 der Kopfbereich mit sich anschließendem Rohrstück 3 für den Kühlmittelabfluß und von dem oberen Staves 2 der untere Endbereich mit sich anschließendem Rohrstück 4 für den Kühlmittelzufluß dargestellt. Die Rohrstücke 3, 4 selbst verlaufen durch in die Ofenwand 5 eingebrachte Öffnungen 6, 7.

Die Staves 1, 2 umfassen jeweils einen Grundkörper 8 mit vertikalen Kühlkanälen 9. Die Staves bestehen aus Kupfer oder einer niedriglegierten Kupferlegierung. Zum Ofeninneren hin sind die Staves 1, 2 mit Stegen und Nuten 10, 11 zur Aufnahme von Feuerfestmaterial versehen. An den Grundkörper 8 des Staves 1 ist kopfseitig ein erfindungsgemäß vorgeschlagenes Endstück 12 angeschweißt. Dieses weist in Verlängerung zum jeweiligen vertikalen Kühlkanal 9 bzw. der weiteren, wegen des Querschnitts nicht sichtbaren Kühlkanäle, des Grundkörpers einen Kanalabschnitt 13 auf, der im Verhältnis zum Querschnitt des vertikalen Kühlkanals 9 einen vergrößerten Querschnitt aufweist und mittels eines Führungselementes 14 teilweise unterteilt wird. Das Führungselement 14 erstreckt sich bei der gezeigten Ausführungsform in direkter Verlängerung der zum Ofenpanzer zeigenden Kanalseite 15 des sichtbaren Kanals des Grundkörpers.

Bei Ausbildung als Gußteils ist auf Höhe des Rohrstückes 3 in das separate Endstück eine entsprechende Bohrung zur Verbindung mit den die Hochofenwand durchdringenden Rohrstücken eingebracht. Als Schweißkonstruktion kann das Endstück mehrteilig ausgebildet sein, wobei die Teile dann durch Schweißnähte verbunden werden.

Nachfolgend wird die Wasserführung im unteren Staves 1 in seinem Kopfteil 12 beschrieben, welche durch die Pfeile verdeutlicht ist. Durch das vorgeschlagene Endstück 13 wird das Kühlwasser so geführt, daß es zunächst bis an den unmittelbaren Rand des Kühlelementes fließt. Anschließend fließt es nach einer 180°-Umlenkung eine kurze Strecke entgegen der vorherigen Strömungsrichtung und wird dann nochmals um 90° zum Rohrstück 3 hin abgelenkt, um über das Rohrstück 3 und einen nicht dargestellten Krümmer (hier mit gestrichelter Linie angedeutet) zum Rohrstück 4 des jeweils darüber liegenden Staves 2 geführt zu werden. Aus dem obersten Stave wird das Kühlwasser dann in den Kühlkreislauf des Hochofens eingespeist.

Die Rohrstücke 3, 4 selbst sind mit Kompensatoren 16, 17 umgeben, die für die Gasdichtigkeit an den Rohrstücken notwendig sind. Es wird deutlich, daß trotz des durch die Kompensatoren 16, 17 bedingten Abstandes der Rohrstücke 3, 4 eine optimale Kühlung der Kantenbereiche des Kühlelementes erreicht wird.

Bevorzugt werden die Endstücke bereits vor der Montage mit den Rohrstücken 3 versehen.

Es ist nicht unbedingt notwendig, sowohl das Kopf- als auch Bodenstück des Staves mit dem erfindungsgemäßen Endstück mit veränderter Wasserführung zu ersetzen. Schon die - hier gezeigte - einseitige Änderung der Wasserführung im Kantenbereich erbringt eine höhere Kühlleistung an den Kantenbereichen von zwei übereinander angeordneten Staves. Vorteilhafterweise wird ein Stave nur einseitig mit dem separaten Endstück versehen, das zwar im Verhältnis zu zwei Endstücken, d.h. am Kopf- und Fußbereich, länger ausgebildet ist, aber hinsichtlich der Herstellung wirtschaftliche Vorteile aufweist.

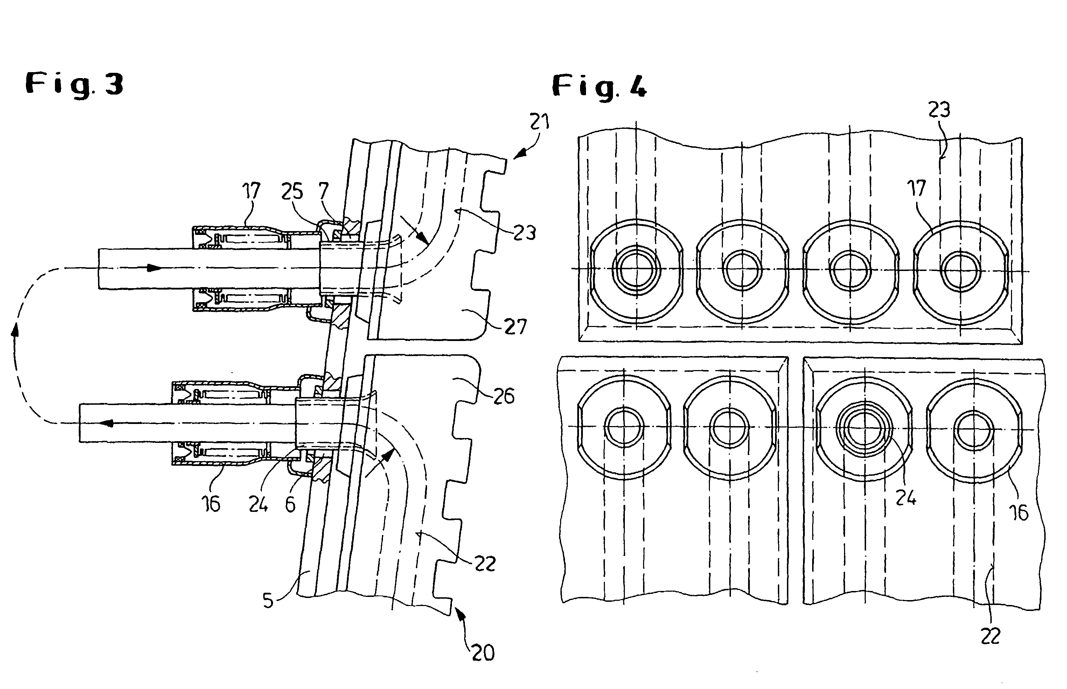

Die Anordnung von Staves an der Hochofenwand, die sich daraus ergibt, daß die jeweiligen Staves nur kopfseitig mit Endstücken versehen sind, ist aus Fig. 2 entnehmbar. Die hier dargestellten Staves 1, 2 setzen sich aus stranggepreßten oder gewalzten Profilen zusammen, die entlang ihrer Längsseite an ihren Stegen verschweißt sind (vgl. gestrichelte Linie). Jeweils ein Profil ist kopfseitig mit einem Endstück 12 mit erfindungsgemäß vorgeschlagener Wasserführung verschweißt, was durch die strichpunktierte Linie der Schweißnaht 19 deutlich wird. Die jeweiligen Rohrstücke für den Wasserzulauf und -ablauf sind von der Nahtstelle 18 zwischen den beiden übereinander angeordneten Staves 1, 2 unterschiedlich weit entfernt. Die Nahtstelle ist demnach nicht mittig angeordnet (vgl. Fig. 4).

Durch die in Fig. 2 gekennzeichneten Strecken A und A' ist dargestellt, wie sich durch das Vorsehen des wasserdurchflossenen Endstücks 12 mit entsprechendem Element für die Wasserführung 14 der Abstand zwischen Kühlwasser durchflossenem Bereich und äußeren Kanten der Staves verkürzt und somit die Verbesserung der Kühlwirkung in Ecken und Kanten erreicht wird.

Es sei erwähnt, daß ein kopfseitig angebrachtes Endstück den Vorteil hat, daß es als Festpunkt für die Aufhängung des Kühlelementes dient. Die Anordnung des Endstücks am unteren Teil des Kühlelementes hat im Gegensatz dazu den Vorteil, daß der Gefahr der Bildung von Luft- oder Dampfräumen entgegengewirkt wird, die durch ihre isolierende Wirkung eine gute Kühlung behindern könnten.

Zum Vergleich ist in Fig. 3 die Wasserführung in bisher bekannten Staves dargestellt. Teile dieser Kühlelemente, die mit denen in Fig. 1 übereinstimmen, weisen gleiche Bezugszeichen auf. Die hier dargestellten Staves 20, 21 sind mit eingegossenen Rohren 22, 23 als Kühlkanäle versehen, die mittels entsprechender Schutzrohre 24, 25 durch entsprechende Öffnungen 6, 7 durch die Ofenwand 5 geführt werden. Der Kühlwasserfluß zwischen zwei Staves ist wiederum mit einer gestrichelten Linie angedeutet. Es wird deutlich, daß im Verhältnis zu den erfindungsgemäß vorgeschlagenen Kühlelementen sehr viel größere Kantenbereiche 26, 27 nicht gekühlt werden, die somit einem größeren Verschleiß ausgesetzt sind. Fig. 4 zeigt in Gegenüberstellung zu Fig. 2 eine Ansicht der übereinander angeordneten Kühlelemente 20, 21 mit vertikal verlaufenden Kühlkanälen 22, 23 nach dem Stand der Technik. Bei diesen bisher üblichen Staveanordnungen wird die Nahtstelle zwischen zwei entlang der Hochofenwand vertikal übereinander angeordneten Staves grundsätzlich im gleichen Abstand von den Kühlkanälen und somit mittig zu den jeweiligen Kantenbereichen angeordnet.

## Patentansprüche

1. Kühlelement (1, 2) für Schachtöfen, mit einem im Kühlelement (1, 2) innen angeordneten Kanal (9) für nur in einer Richtung fließendes Kühlmittel, zu welchem Kanal (9) an gegenüberliegenden Randbereichen des Kühlelementes (1, 2) von außen mit dem Kühlelement (1, 2) verbundene Rohrstücke (3, 4) für den Zulauf bzw. Ablauf des Kühlmittels führen,
**dadurch gekennzeichnet,**
**dass** der Kanal (9) in einem Bereich, der über das Rohrstück (3) und / oder das Rohrstück (4) hinaus bis zur Kante des Kühlelementes (1, 2) reicht, in einen U-förmigen Kanalabschnitt (13) für entlang eines Führungselementes (14) hin - und zurückfließendes Kühlmittel übergeht.

2. Kühlelement nach Anspruch 1,
**dadurch gekennzeichnet,**
**dass** der Kantenbereich einschließlich des jeweiligen Kühlabschnitts (13) mit Führungselement (14) als mindestens ein separates Endstück (12) ausgebildet ist, das an dem die internen Kühlkanäle (9) führenden Grundkörper (8) befestigt ist.

3. Kühlelement nach Anspruch 2,
**dadurch gekennzeichnet,**
**dass** das separate Endstück (12) als Gussteil oder als Schweißkonstruktion ausgebildet ist und mit dem Grundkörper (8) verschweißt wird.

4. Kühlelement nach einem der Ansprüche 1 bis 3,
**dadurch gekennzeichnet,**
**dass** die Querschnittsabmessung des Kanalabschnitts (13) im Verhältnis zu den Abmessungen des Kühlkanals (9) im Grundkörper (8) verdoppelt ist und dass das Führungselement (14) so angeordnet ist, dass es den Kanalabschnitt (13) in zwei Kühlkanäle unterteilt mit sich entsprechenden Abmessungen.

5. Kühlelement nach Anspruch 2 oder 3,
**dadurch gekennzeichnet,**
**dass** das separate Endstück (12) auf der Seite des Ofenpanzers wenigstens mit einer Bohrung versehen ist, in die der Mündungsbereich des jeweiligen Rohrstückes (3, 4) für den Kühlmittelzufluss - oder abfluss eingeführt und verschweißt wird.

6. Kühlelement nach Anspruche 2 oder 3,
**dadurch gekennzeichnet,**
**dass** es einen Grundkörper (8) aus mindestens zwei aneinandergeschweissten, stranggepressten oder gewalzten Profilen, die jeweils von mindestens einem Kühlkanal (9) durchzogen sind, sowie eine der Anzahl der Profile entsprechende Anzahl an Endstücken (12) umfasst, die kopf- oder fußseitig mit den Profilen verschweißt sind.

## Claims

1. Cooling element (1, 2) for blast furnaces, with a channel (9), which is internally arranged in the cooling element (1, 2), for coolant flowing in only one direction, leading to which channel (9) are pipe lengths (3, 4), which are connected at opposite edge regions of the cooling element (1, 2) from outside with the cooling element (1, 2), for the feed and discharge of the coolant, **characterised in that** the channel (9) in a region, which reaches above the pipe length (3) and/or the pipe length (4) up to the edge of the cooling element (1, 2), goes over into a U-shaped channel section (13) for coolant flowing forward and back along a guide element (14).

2. Cooling element according to claim 1, **characterised in that** the edge region inclusive of the respective cooling section (13) with guide element (14) is constructed as at least one separate end member (12) which is fastened to the base body (8) guiding the internal cooling channels (9).

3. Cooling element according to claim 2, **characterised in that** the separate end member (12) is constructed as a cast part or as a welded construction and is welded to the base body (8).

4. Cooling element according to one of claims 1 to 3, **characterised in that** the cross-sectional dimension of the channel section (13) in relation to the dimensions of the cooling channel (9) in the base body (8) is twice as large and that the guide element (14) is so arranged that it subdivides the channel section (13) into two cooling channels with corresponding dimensions.

5. Cooling element according to claim 2 or 3, **characterised in that** the separate end member (12) is provided on the side of the furnace steel jacket at least with a bore in which the opening region of the respective pipe length (3, 4) for the coolant inflow or outflow is introduced and welded.

6. Cooling element according to claim 2 or 3, **characterised in that** it comprises a base body (8) consisting of at least two welded-together, extruded or rolled profile sections, which are each penetrated by at least one cooling channel (9), as well as a number, which corresponds with the number of profile sections, of end members (12), which are welded at the head end or foot end to the profile members.

## Revendications

1. Elément de refroidissement (1, 2) pour fours à cuve, comprenant un canal (9) agencé à l'intérieur d'un élément de refroidissement (1, 2) pour un agent de refroidissement ne s'écoulant que dans un sens, des tubes (3, 4), destinés à l'alimentation ou à l'évacuation de l'agent de refroidissement, conduisant vers le canal (9) en des zones de bord opposées de l'élément de refroidissement (1, 2), reliés à partir de l'extérieur à l'élément de refroidissement (1, 2), **caractérisé en ce que** le canal (9) devient une section de canal (13) en forme de U dans une zone qui s'étend au-delà du tube (3) et/ou du tube (4) jusqu'au bord de l'élément de refroidissement (1, 2), destinée à l'agent de refroidissement s'écoulant dans un sens et retour le long d'un élément de guidage (14).

2. Elément de refroidissement selon la revendication 1, **caractérisé en ce que** la zone de bord, y compris la section de refroidissement (13) avec l'élément de guidage (14), est réalisée sous forme d'au moins une pièce d'extrémité (12) séparée qui est fixée sur le corps de base (8) guidant les canaux de refroidissement (9) interne.

3. Elément de refroidissement selon la revendication 2, **caractérisé en ce que** la pièce d'extrémité (12) séparée est réalisée sous forme d'une pièce coulée ou d'une construction soudée et est soudée avec le corps de base (8).

4. Elément de refroidissement selon l'une quelconque des revendications 1 à 3, **caractérisé en ce que** les dimensions de la section du canal (13) sont doublées par rapport aux dimensions du canal de refroidissement (9) dans le corps de base (8) et **en ce que** l'élément de guidage (14) est disposé de telle manière qu'il divise la section de canal (13) en deux canaux de refroidissement avec les dimensions qui sont correspondantes.

5. Elément de refroidissement selon la revendication 2 ou 3, **caractérisé en ce que** la pièce d'extrémité (12) séparée est pourvue, du côté du blindage du four, d'au moins un trou dans lequel est introduit et soudé l'orifice de chaque tube (3, 4) destiné à l'alimentation ou à l'évacuation de l'agent de refroidissement.

6. Elément de refroidissement selon la revendication 2 ou 3, **caractérisé en ce qu'**il comprend un corps de base (8) constitué par au moins deux profilés soudés l'un contre l'autre, extrudés ou laminés, qui sont à chaque fois traversés par au moins un canal de refroidissement (9) ainsi que par un nombre de pièces d'extrémité (12) correspondant au nombre de profilés, qui sont soudées du côté de la tête ou du pied avec les profilés.
